# EUROPEAN PATENT APPLICATION

(11) **EP 4 679 614 A2**
(43) Date of publication of application: **14.01.2026**
(21) Application number: 25181735.9
(22) Date of filing: 10.06.2025
(51) Int. Cl.: H01M 50/531, H01M 50/543

(54) **CURRENT COLLECTOR, SECONDARY BATTERY AND ELECTRONIC DEVICE**

(30) Priority: 10.07.2024 CN 202421636673 U
(71) Applicant: AESC Japan Ltd., Yokohama-Shi, Kanagawa 220-0012 (JP)
(72) Inventor: JI, Peng, Jiangyin City, Wuxi City, 214443 (CN)
(74) Representative: Becker, Eberhard

(57) **Abstract**

The present disclosure provides a current collector (150), configured to electrically connect an electrode assembly (120) and a terminal (140), and including: a terminal fixing part (10) and an electrode assembly connecting part (20) disposed around the terminal fixing part (10); and a first transition part (22), connected between the terminal fixing part (10) and the electrode assembly connecting part (20). The current collector (150) has an electrode assembly connecting side and a terminal connecting side distributed in opposite directions. The first transition part (22) and the terminal fixing part (10) respectively include a first surface (221) and a first end surface (101) located on the terminal connecting side, as well as a second surface (222) and a second end surface (102) located on the electrode assembly connecting side. The second surface (222) protrudes in a direction away from the terminal connecting side compared with the second end surface (102).

## Description

### BACKGROUND

### Technical Field

The present disclosure relates to a current collector, a secondary battery and an electronic device.

### Description of Related Art

In the field related to new energy power batteries, secondary batteries generally include electrode assemblies, housings, cover plates, and other components. The electrode assembly includes positive electrode sheets, negative electrode sheets, and separators positioned between the positive and negative electrode sheets. These positive electrode sheets, negative electrode sheets, and separators are stacked together and wound to form an electrode assembly, which is subsequently packaged within the housing.

### SUMMARY

In view of the problems existing in the related technology, the purpose of the present disclosure is to provide a current collector, a secondary battery and an electronic device to at least improve the utilization rate of the space occupied by the current collector.

To achieve the above purpose, an embodiment of the present disclosure provides a current collector, configured to electrically connect an electrode assembly and a terminal, and including: a terminal fixing part and an electrode assembly connecting part disposed around the terminal fixing part; and a first transition part, connected between the terminal fixing part and the electrode assembly connecting part. The current collector has an electrode assembly connecting side and a terminal connecting side distributed in opposite directions (distribution in opposite directions refers to one side of the current collector being the electrode assembly connecting side, and the other side in the opposite thickness direction being the terminal connecting side). The first transition part includes a first surface located on the terminal connecting side and a second surface located on the electrode assembly connecting side. The terminal fixing part includes a first end surface located on the terminal connecting side and a second end surface located on the electrode assembly connecting side. The second surface protrudes in a direction away from the terminal connecting side compared with the second end surface.

In some embodiments, the first surface of the first transition part protrudes in a direction away from the terminal; the current collector is integrally formed.

In some embodiments, the electrode assembly connecting part includes a third end surface located on the terminal connecting side, and a fourth end surface located on the electrode assembly connecting side. The second end surface protrudes in a direction away from the terminal connecting side by a first depth compared with the fourth end surface. The range of the first depth is 0.01 mm to 5 mm.

In some embodiments, the range of the second depth by which the second surface of the first transition part protrudes in a direction away from the terminal connecting side compared with the second end surface is 0.01 mm to 5 mm.

In some embodiments, the current collector further includes: a second transition part, connected between the first transition part and the electrode assembly connecting part. The second transition part includes a third surface located on the terminal connecting side, and a fourth surface located on the electrode assembly connecting side. The third surface protrudes in a direction away from the electrode assembly connecting side and does not protrude beyond the first end surface.

In some embodiments, the terminal fixing part has a truncated cone shape, in an orthogonal projection along the direction from the first end surface to the second end surface, the terminal fixing part is two concentric circles, and/or, the first transition part is disposed around the terminal fixing part.

An embodiment of the present disclosure also provides a secondary battery, including: an electrode assembly, wherein the electrode assembly is formed by winding a positive electrode sheet, a first separator, a negative electrode sheet and a second separator stacked in sequence; a current collector described in any one of the above embodiments, wherein the terminal fixing part is electrically connected to the terminal of the secondary battery, and the electrode assembly connecting part is electrically connected to the tab of the electrode assembly.

In some embodiments, the electrode assembly includes a winding center, and at least a part of the terminal fixing part and/or the first transition part is located inside the winding center. Or, along the direction from the first end surface to the second end surface, the orthogonal projection of the first transition part is at least partially located inside the winding center.

In some embodiments, the secondary battery is a columnar battery. The range of the ratio of height to diameter of the columnar battery is 1.7 to 3.3.

An embodiment of the present disclosure also provides an electronic device, including at least one of the current collector described in any one of the above embodiments, and the secondary battery described in any one of the above embodiments.

The advantageous technical effects of the present disclosure are as follows:
In the embodiments of the present disclosure, by setting a first transition part that protrudes away from the terminal connecting side, it is possible to reduce the distance between the second end surface of the terminal fixing part of the current collector and the electrode assembly connecting part, thereby reducing the distance between the electrode assembly and the terminal, reducing the height space required by the current collector, and improving the utilization rate of the space occupied by the current collector.

In some embodiments of the present disclosure, lithium-ion batteries may generate gas during cycling and storage, causing battery volume expansion. After gas is generated, internal pressure compresses the terminal. Also, under vibration conditions, lithium-ion batteries are highly susceptible to stress concentration at the upper and lower parts of the terminal. Through the setting of the first transition part, the stress between the terminal fixing part and the electrode assembly connecting part may be relieved, avoiding welding failure between the tab and the current collector which would affect battery performance. The first transition part may also relieve the stress transferred from the terminal to the electrode assembly connecting part.

### BRIEF DESCRIPTION OF THE DRAWINGS

In order to explain the technical solutions in the embodiments of the present disclosure or in the related art more clearly, a simple introduction will be given below to the drawings needed in the description of the embodiments or the related art. Clearly, the drawings described below are some embodiments of the present disclosure. For those skilled in the art, other drawings may be obtained based on these drawings without creative effort.
FIG. 1 shows a schematic view when the electronic device in an embodiment of the present disclosure is a vehicle.
FIG. 2 shows a perspective view of an embodiment of the secondary battery as a columnar battery according to an embodiment of the present disclosure.
FIG. 3 shows a cross-sectional view of an embodiment of the secondary battery as a columnar battery according to an embodiment of the present disclosure.
FIG. 4 shows an electrode assembly when the secondary battery is a columnar battery according to an embodiment of the present disclosure.
FIG. 5 shows an enlarged view of an area A where the current collector in FIG. 3 is located.

### DESCRIPTION OF THE EMBODIMENTS

For a better understanding of the spirit of the embodiments of the present disclosure, further explanation is provided in the following in conjunction with some preferred embodiments of the present disclosure.

The embodiments of the present disclosure will be described in detail below. Throughout the specification of the present disclosure, the same or similar components and components with the same or similar functions are represented by similar reference numerals. The embodiments related to the drawings described herein are illustrative, graphical, and provided for a basic understanding of the present disclosure. The embodiments of the present disclosure should not be interpreted as limitations on the present disclosure.

As used herein, the terms "substantially", "generally", "essentially" and "about" are used to describe and explain small variations. When used in conjunction with an event or circumstance, these terms may refer to examples where the event or circumstance occurs precisely as well as examples where the event or circumstance occurs very approximately.

In this specification, unless specifically designated or limited, relative terms such as: "central", "longitudinal", "lateral", "front", "rear", "right", "left", "internal", "external", "lower", "higher", "horizontal", "vertical", "above", "below", "upper", "lower", "top", "bottom" and their derivative terms (such as "horizontally", "downwardly", "upwardly", and so on) should be interpreted as referring to the direction described in the discussion or shown in the drawings. These relative terms are only for ease of description and do not require that the present disclosure be constructed or operated in a specific direction.

For ease of description, "first", "second", "third", and so on may be used herein to distinguish different components of a figure or a series of figures. "First", "second", "third", and so on are not intended to describe the corresponding components.

The present disclosure provides an electronic device 1000. The electronic device 1000 includes a battery assembly 10. The operation part of the electronic device 1000 is electrically connected to the battery assembly 1002 to obtain power support. As an example, the electronic device 1000 is a vehicle, the vehicle may be a gasoline vehicle, a gas vehicle or a new energy vehicle, the new energy vehicle may be a pure electric vehicle, a hybrid vehicle or a range-extended vehicle, and so on, but is not limited thereto. The operation part is a car body. The battery assembly 1002 is disposed at the bottom of the car body, and provides power support for the operation of the vehicle or the operation of electrical components in the vehicle. However, in some other embodiments, the electronic device 1000 may also be a mobile phone, a portable device, a laptop computer, a ship, a spacecraft, an electric toy and an electric tool, and so on. The spacecraft includes aircraft, rockets, space shuttles and spaceships, and so on; the operation part may obtain power from the battery assembly 1002, and is a unit component that performs corresponding operation, such as the fan blade rotation unit of a fan, the dust suction operation unit of a vacuum cleaner, etc. Electric toys include fixed or mobile electric toys, for example, game consoles, electric car toys, electric ship toys and electric aircraft toys, and so on; electric tools include metal cutting electric tools, grinding electric tools, assembly electric tools and railway electric tools, for example, electric drills, electric grinders, electric wrenches, electric screwdrivers, electric hammers, impact drills, concrete vibrators and electric planers, etc. The embodiments of the present disclosure do not impose special restrictions on the above electronic device 1000.

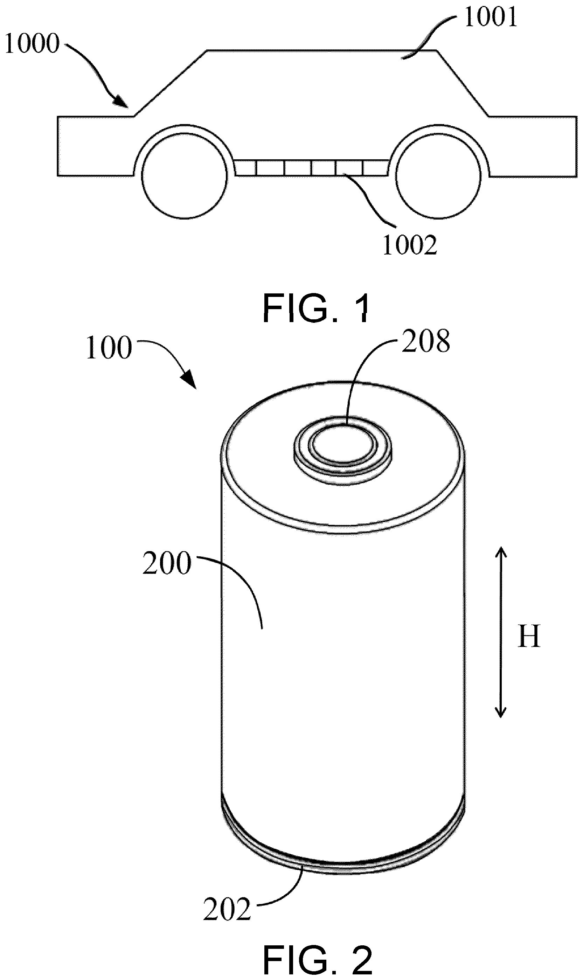

The following embodiments are explained using the electronic device 1000 as a vehicle for convenience. Referring to FIG. 1, a battery assembly 1002 is disposed inside the vehicle. The battery assembly 1002 may be disposed at the bottom or head or tail of the car body 1001. The battery assembly 1002 may be used for powering the vehicle, for example, the battery assembly 1002 may serve as the operating power source for the vehicle.

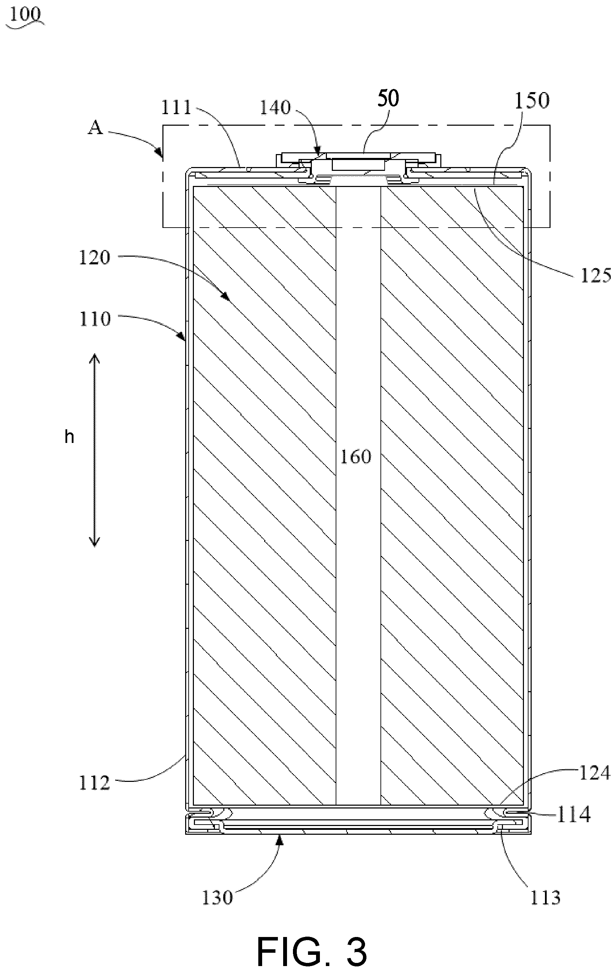

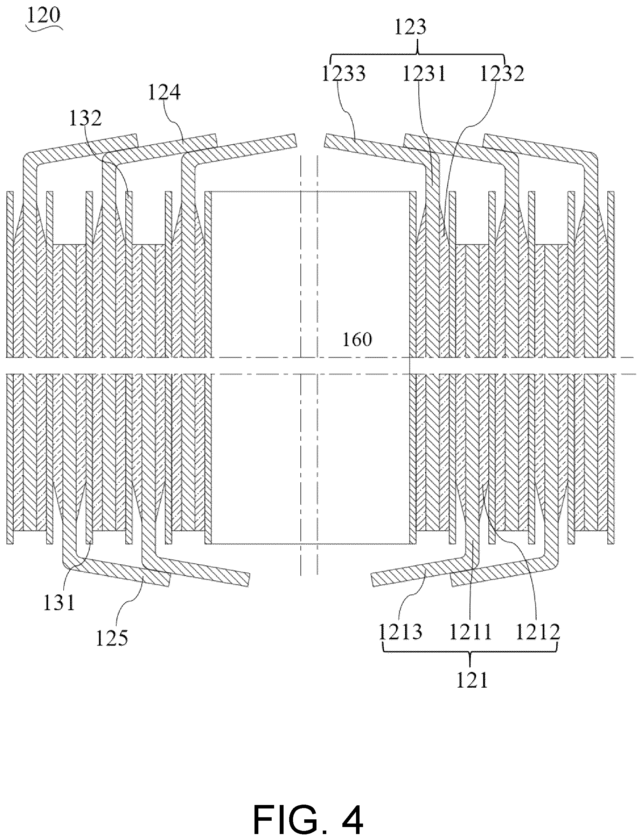

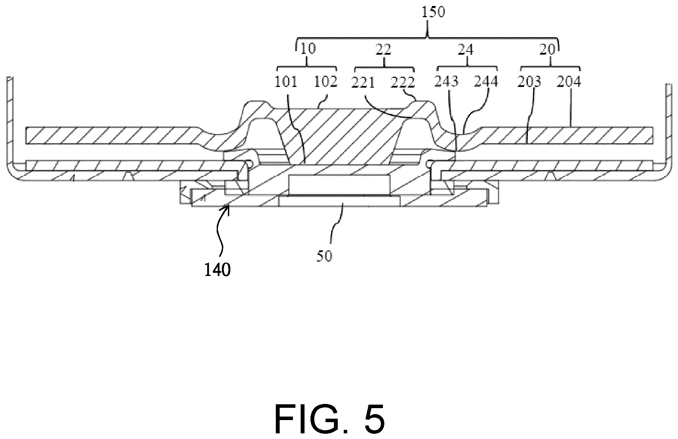

FIG. 2 shows a perspective view of an embodiment of a secondary battery 100 as a columnar battery according to an embodiment of the present disclosure. FIG. 3 shows a sectional view of an embodiment of the secondary battery 100 as a columnar battery according to an embodiment of the present disclosure, where only the position of the current collector 150 is shown, not its specific shape. FIG. 4 shows an electrode assembly 120 when the secondary battery 100 is a columnar battery according to an embodiment of the present disclosure. FIG. 5 shows an enlarged view of an area A where the current collector 150 in FIG. 3 is located. The secondary battery 100 includes a housing 110, an electrode assembly 120, a terminal 140 and a cover plate 130. The housing 110 includes an end wall 111 and a side wall 112 surrounding the end wall 111. As long as a stable seal and electrical connection can be established, the connection between the end wall 111 and the side wall 112 may be implemented in various ways, for example, the connection may be in the form of integral stamping, integral casting or separate welding. The enclosure configuration of the side wall 112 is not limited herein, and may be in the form of a columnar or prismatic enclosure configuration, or may enclose along any other closed-loop contour that can match the end wall 111. In this embodiment, the outer edge of the end wall 111 is circular. The side wall 112 surrounds the outer edge of the end wall 111 in a columnar shape, and forms a circular opening 113 at one end of the side wall 112 facing away from the end wall 111. The housing 110 formed by the end wall 111 and the side wall 112 forms an accommodating cavity for accommodating the electrode assembly 120, electrolyte and other necessary battery components. Specifically, the diameter of the housing 110 may be determined according to the specific size of the electrode assembly 120, such as 18mm, 21mm, 46mm, etc. The material of the housing 110 may be various, for example, copper, iron, aluminum, steel, aluminum alloy, etc. In order to prevent the housing 110 from rusting after long-term use, a layer of anti-rust material such as metallic nickel may also be plated on the surface of the housing 110.

The electrode assembly 120 is accommodated in the housing 110. The electrode assembly 120 is a component in the secondary battery 100 where electrochemical reactions occur. The housing 110 may contain one or more electrode assemblies 120. The electrode assembly 120 includes a positive electrode sheet 121, a first separator 131, a negative electrode sheet 123 and a second separator 132, which are wound to form a wound structure. Specifically, in this embodiment, the electrode assembly 120 includes a positive electrode sheet 121, a first separator 131, a negative electrode sheet 123 and a second separator 132 wound around the axial direction of the housing 110. The positive electrode sheet 121 includes a positive current collector 1211 and a positive electrode active substance layer coated on the positive current collector 1211. A first coated area 1212 coated with the positive electrode active substance layer and a first uncoated area 1213 without the positive electrode active substance layer are formed on the positive current collector 1211. The first coated area 1212 and the first uncoated area 1213 are arranged along the axial direction of the housing 110. The first uncoated area 1213 extends beyond the separator 122 towards one end of the secondary battery 100 in the height direction h, and bends towards the axis of the housing 110 to form a stacked positive electrode tab 125. The negative electrode sheet 123 includes a negative current collector 1231 and a negative electrode active substance layer coated on the negative current collector 1231. A second coated area 1232 coated with the negative electrode active substance layer and a second uncoated area 1233 without the negative electrode active substance layer are formed on the negative current collector 1231. The second coated area 1232 and the second uncoated area 1233 are arranged along the axial direction of the housing 110. The second uncoated area 1233 extends beyond the separator 122 towards the other end of the secondary battery 100 in the height direction h, and bends towards the axis of the housing 110 to form a stacked negative electrode tab 124. The first separator 131 and the second separator 132 are disposed between the positive electrode sheet 121 and the negative electrode sheet 123 to isolate the positive electrode active substance layer and the negative electrode active substance layer. Taking the lithium-ion columnar battery 100 as an example, the material of the positive current collector 1211 may be aluminium. The positive electrode active substance layer includes positive electrode active substance. The positive electrode active substance may be lithium cobalt oxide, lithium iron phosphate, ternary lithium or lithium manganese oxide, etc. The material of the negative current collector 1231 may be copper. The negative electrode active substance layer includes negative electrode active substance. The negative electrode active substance may be carbon or silicon, etc. The base material of the first separator 131 and the second separator 132 may be PP (polypropylene) or PE (polyethylene), etc. To provide protection and insulation for the cell, an insulating film may also be covered on the outside of the cell, and the insulating film may be synthesized from PP, PE, PET, PVC or other polymer materials.

Furthermore, in the present disclosure, the positive electrode tab 125 faces the end wall 111 or faces the opening 113, then the negative electrode tab 124 faces the other end of the housing 110. In this embodiment, the positive electrode tab 125 faces the end wall 111 and is electrically connected with the terminal 140 to make the terminal 140 positively charged, while the negative electrode tab 124 faces the opening 113, and the housing 110 is electrically connected with the negative electrode tab 124, thereby being negatively charged. However, in other embodiments, the negative electrode tab 124 may be connected with the terminal 140, and the positive electrode tab 125 may be connected with the housing 110.

The cover plate 130 seals and is disposed on the opening 113. The shape of the outer edge of the cover plate 130 corresponds to the shape of the opening 113, and is connected with the side wall 112 to seal the opening 113. The configuration methods of the cover plate 130 include but are not limited to mechanical sealing or welding sealing. In this embodiment, the cover plate 130 adopts a mechanical sealing method to seal and block the opening 113.

In an example of the secondary battery 100 of the present disclosure, the electrode assembly 120 is sealed and disposed inside the housing 110. Along the height direction h of the columnar battery 100, the electrode assembly 120 is disposed between the end wall 111 and the slot 114, and the slot 114 may limit the movement of the electrode assembly 120 in the axial direction between the end wall 111 and the slot 114.

An embodiment of the present disclosure provides improvements upon embodiments wherein the electrode assembly-facing surface of the terminal fixing part and the electrode assembly connecting part of the current collector are substantially aligned with each other. The terminal fixing part needs to be set in a truncated cone shape to electrically connect with the terminal, therefore, the aforementioned embodiment of the current collector, which is nearly in alignment, occupies a considerable height space from the terminal-facing surface of the terminal fixing part to the electrode assembly-facing surface of the electrode assembly connecting part, resulting in low spatial utilization efficiency.

Referring to FIG. 5, an embodiment of the present disclosure provides a current collector 150, which is configured to electrically connect the electrode assembly 120 and the terminal 140, and includes: a terminal fixing part 10 and an electrode assembly connecting part 20 disposed around the terminal fixing part 10; a first transition part 22, connected between the terminal fixing part 10 and the electrode assembly connecting part 20. The current collector 150 has an electrode assembly connecting side and a terminal connecting side distributed in opposite directions. The first transition part 22 includes a first surface 221 located on the terminal connecting side and a second surface 222 located on the electrode assembly connecting side. The terminal fixing part 10 includes a first end surface 101 located on the terminal connecting side and a second end surface 102 located on the electrode assembly connecting side. The second surface 222 protrudes in a direction away from the terminal connecting side compared to the second end surface 102. In the embodiment of the present disclosure, by setting a first transition part 22 that protrudes away from the terminal connecting side, it is possible to reduce the distance between the second end surface 102 of the terminal fixing part 10 of the current collector 150 and the electrode assembly connecting part 20, thereby reducing the distance between the electrode assembly 120 and the terminal 140, reducing the height space needed by the current collector 150, and improving the utilization rate of the space occupied by the current collector 150. In some embodiments, the above shape of the current collector 150 may be formed through stamping processing, or formed when the current collector 150 is pressed against the terminal 140 for welding.

In some embodiments of the present disclosure, the lithium-ion secondary battery 100 may generate gas during cycling and storage, causing battery volume expansion. After gas is generated, the internal pressure compresses the terminal 140. Additionally, under vibration conditions, the lithium-ion columnar battery 100 is highly susceptible to stress concentration at the upper and lower parts of the terminal 140. Through the setting of the first transition part 22, the stress between the terminal fixing part 10 and the electrode assembly connecting part 20 may be relieved, avoiding welding failure between the tab 124/125 and the current collector 150 which would affect battery performance. The first transition part 22 may also relieve the stress transferred from the terminal 140 to the electrode assembly connecting part 20.

In some embodiments, the first surface 221 of the first transition part 22 protrudes in a direction away from the terminal 140. The current collector 150 is integrally formed, which means that the first transition part 22 with the above-mentioned protrusions and recesses is not an additional protruding part welded onto the current collector 150.

In some embodiments, the material of the current collector 150 is aluminium.

In some embodiments, the electrode assembly connecting part 20 includes a third end surface 203 located on the terminal connecting side, and a fourth end surface 204 located on the electrode assembly connecting side. The second end surface 102 protrudes in a direction away from the terminal connecting side by a first depth compared to the fourth end surface 204. The range of the first depth is 0.01 mm to 5 mm. That is to say, the range of reduced distance (thereby reducing the height space) between the first end surface 101 and the fourth end surface 204 is 0.01 mm to 5 mm.

In some embodiments, the range of the second depth by which the second surface 222 of the first transition part 22 protrudes in a direction away from the terminal connecting side compared to the second end surface 102 is 0.01 mm to 5 mm. The value of the depth is greater than or equal to 0.01 mm to ensure that the first transition part 22 protrudes more compared to the electrode assembly connecting part 20, and the value of the depth is less than or equal to 5 mm to ensure that the protrusion depth is not too deep to prevent the terminal fixing part 10 from contacting the terminal 140.

In some embodiments, the current collector 150 further includes: a second transition part 24, connected between the first transition area 22 and the electrode assembly connecting part 20. The second transition part 24 includes a third surface 243 located pm the terminal connecting side, and a fourth surface 244 located on the electrode assembly connecting side. The third surface 243 protrudes in a direction away from the electrode assembly connecting side and does not protrude beyond the first end surface 101. The fourth surface 244 of the second transition part 24 also protrudes in a direction away from the electrode assembly connecting side. The second transition part 24 protruding in a direction away from the electrode assembly connecting side is disposed to ensure the flatness of the electrode assembly connecting part as much as possible and avoid stress concentration. On the other hand, if the third surface 243 of the second transition part 24 exceeds the first end surface 101, it is possible to cause the first end surface 101 of the terminal fixing part 10 to be unable to contact the terminal 50, resulting in a gap between them, thus the welding strength cannot be ensured.

In some embodiments, the terminal fixing part 10 has a truncated cone shape, in an orthogonal projection along the direction from the first end surface 101 to the second end surface 102, that is, the orthogonal projection along the direction facing the electrode assembly 120, the terminal fixing part 10 is two concentric circles, and/or, the first transition part 22 is disposed around the terminal fixing part 10. That is to say, the lateral dimension of the terminal fixing part 10 decreases along the direction away from the electrode assembly 120. The terminal fixing part 10 with a truncated cone shape may be more precisely electrically connected with the terminal 140. The first transition part 22 is a complete circle.

An embodiment of the present disclosure also provide a secondary battery 100, including: an electrode assembly 120, the electrode assembly 120 is formed by winding a positive electrode sheet 121, a first separator 131, a negative electrode sheet 123 and a second separator 132 in sequence after stacking; and a current collector 150 described in any one of the above embodiments, wherein the terminal fixing part 10 is electrically connected to the terminal 140 of the secondary battery, and the electrode assembly connecting part 20 is electrically connected to the tab of the electrode assembly 120. The secondary battery 100 in the embodiment of the present disclosure uses the current collector 150 with the first transition part 22 to improve the space utilization rate of the secondary battery 100.

In some embodiments, the electrode assembly 120 includes a winding center 160. The winding center 160 is an area located at the center of the positive electrode sheet 121, the first separator 131, the negative electrode sheet 123 and the second separator 132. At least a part of the terminal fixing part 10 and/or the first transition part 22 is located inside the winding center 160. Or, along the direction from the first end surface 101 to the second end surface 102, the orthogonal projection of the first transition part 22 is at least partially located inside the winding center 160. When the battery is in vibration condition, the winding center 160 provides space to accommodate the first transition part 22, which may relieve stress and have better effect. The depth of the terminal fixing part 10 and/or the first transition part 22 recessed in the winding center 160 is, for example, 0.01 mm to 5 mm. When the terminal fixing part 10 is recessed into the winding center 160, the maximum recessed depth is equivalent to the depth of its second end surface 102 protruding towards the electrode assembly 120 compared with the electrode assembly connecting part 20. On one hand, the center of the electrode assembly/bare cell JR 120 is the winding center 125, that is, the center is void. On the other hand, the innermost circle starting from the winding center 125 is the separator, and the number of layers of the electrode sheet (foil material) at the inner circle is less than that of the outer circle, referring to FIG. 4. The number of layers of the positive electrode tab 125 and the negative electrode tab 124 in the area near the winding center 125 is not many, so at least a part of the terminal fixing part 10 and the first transition part 22 may be accommodated inside the electrode assembly 120. In this way, it is possible to reduce the height of the first end surface 101 of the terminal fixing part 10 relative to the electrode assembly 120, and also reduce the space required by the terminal fixing part 10 in the secondary battery 100, thereby improving the space utilization rate of the secondary battery 100. It should be understood that the number of layers of the positive electrode sheet 121 and the negative electrode sheet 123 is not limited to the number shown in FIG. 4, and the number of layers of the actual product is, for example, more than 14 layers.

In some embodiments, the current collector 150 is a positive electrode current collector.

In some embodiments, the secondary battery 100 is a columnar battery. The ratio of the height (as shown in FIG. 3, the distance from the end wall 111 to the cover plate 130) to the diameter (outer diameter) of the columnar battery ranges from 1.7 to 3.3. For example, the height is 80 mm and the diameter is 46 mm; another example is that the height is 15 mm and the diameter is 46 mm. In some embodiments, the columnar battery is a 4680 columnar battery. When the ratio of height to diameter is within the above range, because the secondary battery 100 has a specific height, under some conditions, the vibration of the secondary battery 100 will be transmitted in the height direction of the columnar battery. The current collector 150 may relieve the corresponding stress, thereby improving the safety performance of the battery and avoiding the welding failure between the positive electrode tab 125 and the current collector 150.

An embodiment of the present disclosure also provide a battery assembly 1002, including at least one of the current collector 150 described in any of the above embodiments and the secondary battery 100 described in any of the above embodiments.

An embodiment of the present disclosure also provide an electronic device 1000, including at least one of the current collector 150 described in any of the above embodiments, and the secondary battery 100 (and the battery assembly 1002 above) described in any of the above embodiments.

## Claims

1. A current collector (150), configured to electrically connect an electrode assembly (120) and a terminal (140), **characterized in that** the current collector (150) comprises:
a terminal fixing part (10) and an electrode assembly connecting part (20) disposed around the terminal fixing part (10);
a first transition part (22), connected between the terminal fixing part (10) and the electrode assembly connecting part (20), wherein the current collector (150) has an electrode assembly connecting side and a terminal connecting side distributed in opposite directions, the first transition part (22) comprises a first surface (221) located on the terminal connecting side and a second surface (222) located on the electrode assembly connecting side, the terminal fixing part (10) comprises a first end surface (101) located on the terminal connecting side and a second end surface (102) located on the electrode assembly connecting side,
the second surface (222) protrudes in a direction away from the terminal connecting side compared with the second end surface (102).

2. The current collector (150) according to claim 1, wherein the first surface (221) of the first transition part (22) protrudes in a direction away from the terminal (140);
the current collector (150) is integrally formed.

3. The current collector (150) according to claim 1 or 2, wherein the electrode assembly connecting part (20) comprises a third end surface (203) located on the terminal connecting side, and a fourth end surface (204) located on the electrode assembly connecting side, the second end surface (102) protrudes in the direction away from the terminal connecting side by a first depth compared with the fourth end surface (204), a range of the first depth is 0.01 mm to 5 mm.

4. The current collector (150) according to any one of claims 1 to 3, wherein a range of a second depth by which the second surface (222) of the first transition part (22) protrudes in the direction away from the terminal connecting side compared with the second end surface (102) is 0.01 mm to 5 mm.

5. The current collector (150) according to any one of claims 1 to 4, further comprising:
a second transition part (24), connected between the first transition part (22) and the electrode assembly connecting part (20), wherein the second transition part (24) comprises a third surface (243) located on the terminal connecting side, and a fourth surface (244) located on the electrode assembly connecting side, the third surface (243) protrudes in a direction away from the electrode assembly connecting side and does not protrude beyond the first end surface (101).

6. The current collector (150) according to any one of claims 1 to 5, wherein the terminal fixing part (10) has a truncated cone shape, in an orthogonal projection along a direction from the first end surface (101) to the second end surface (102), the terminal fixing part (10) is two concentric circles, and/or
the first transition part (22) is disposed around the terminal fixing part (10), and/or
a material of the current collector (150) is aluminium.

7. A secondary battery (100), **characterized in that** comprising:
an electrode assembly (120), wherein the electrode assembly (120) is formed by winding a positive electrode sheet (121), a first separator (131), a negative electrode sheet (123) and a second separator (132) stacked in sequence;
the current collector (150) according to any one of claims 1 to 6, wherein the terminal fixing part (10) is electrically connected to a terminal (140) of the secondary battery (100), and the electrode assembly connecting part (20) is electrically connected to a tab of the electrode assembly (120).

8. The secondary battery (100) according to claim 7, wherein the electrode assembly (120) comprises a winding center (160);
at least a part of at least one of the terminal fixing part (10) and/or the first transition part (22) is located inside the winding center (160), or,
along the direction from the first end surface (101) to the second end surface (102), an orthogonal projection of the first transition part (22) is at least partially located inside the winding center (160).

9. The secondary battery (100) according to claim 7 or 8, wherein the secondary battery (100) is a columnar battery, a range of a ratio of height to diameter of the columnar battery is 1.7 to 3.3.

10. An electronic device (1000), **characterized in that** comprising the secondary battery (100) according to any one of claims 7 to 9.
